Europäisches Patentamt

European Patent Office

Office européen des brevets

(11) Numéro de publication: **0 270 814 B1**

## FASCICULE DE BREVET EUROPEEN

(45) Date de publication de fascicule du brevet:
**11.09.91**

(51) Int. Cl.⁵: **A21C 9/04**

(21) Numéro de dépôt: **87115870.5**

(22) Date de dépôt: **29.10.87**

(54) **Appareil de distribution et dosage.**

(30) Priorité: **09.12.86 CH 4905/86**

(43) Date de publication de la demande:
**15.06.88 Bulletin 88/24**

(45) Mention de la délivrance du brevet:
**11.09.91 Bulletin 91/37**

(84) Etats contractants désignés:
**AT BE CH DE FR GB GR IT LI LU NL SE**

(56) Documents cités:
**EP-A- 0 032 481       EP-A- 0 069 929**
**EP-A- 0 125 932       EP-A- 0 192 012**
**DE-U- 8 508 998       US-A- 1 891 038**
**US-A- 4 045 584**

(73) Titulaire: **SOCIETE DES PRODUITS NESTLE S.A.**
**Case postale 353**
**CH-1800 Vevey(CH)**

(72) Inventeur: **Cand, Jean-Pierre**
**Chaînettes 16**
**CH-1400 Yverdon(CH)**
Inventeur: **Heck, Ernst**
**Ch. du Motty 10**
**CH-1026 Echandens(CH)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un appareil de distribution et dosage d'une masse granuleuse et collante, notamment d'une masse pour biscuits à mouler.

Dans la fabrication de biscuits composés par exemple de granules agglomérés de céréales cuites expansées enrobés d'un liant à base de sirop de sucre, la manipulation de la masse de granules mélangés au liant présente de sérieuses difficultés. En effet, une telle masse a d'une part tendance à se prendre en bloc et présente d'autre part un talus d'écoulement aigu, en d'autres termes elle ne flue pas. Ces problèmes de manipulation rendent l'opération du moulage des biscuits particulièrement délicate.

On connaît, par exemple par le document FR-A-2.124.735, un appareil de moulage d'une masse similaire comprenant une bande de transport formée de plaques juxtaposées percées chacune d'une rangée de trous dans lesquels la masse est indroduite par un caisson distributeur sans fond en contact direct avec la bande. La masse est retenue dans les trous par une plaque support fixe sur laquelle la bande glisse. La masse est comprimée ensuite dans les trous ou alvéoles par une rangée de pistons. Puis les biscuits moulés sont expulsés par les mêmes pistons en aval du support fixe. Un tel appareil convient si la masse flue suffisamment. En effet, si la masse ne flue pas, tous les efforts exercés sur elle sont transmis dans l'axe de la force appliquée. En conséquence, les trous ou alvéoles peuvent ne pas se remplir de manière homogène lors de leur passage sous le caisson sans fond et les pistons ne peuvent pas égaliser la surface ensuite. Les biscuits produits ainsi avec une masse qui ne flue pas risquent donc de présenter de trop fortes variations de poids unitaire et des irrégularités de forme.

La présente invention a pour but de proposer un appareil de distribution et dosage d'une masse granuleuse et collante qui permette à la fois un dosage précis et la répartition régulière de cette masse dans des alvéoles de moulage par exemple.

La présente invention a ainsi pour objet un dispositif selon la revendication 1 de la présente demande.

Cet appareil permet en effet de distribuer simultanément sur la même ligne plusieurs portions de même forme et de même volume d'une masse granuleuse et collante non compactée, et de répéter l'opération à une fréquence adéquate sans que l'état de la masse distribuée ne varie. En d'autres termes cet appareil garantit à la fois la régularité du volume et de la forme des portions, l'homogénéité de la masse et la reproductibilité de ces qualités qui est indispensable pour une production continue.

Ledit dispositif de transport principal permet en particulier de déplacer une masse granuleuse et collante sous forme d'un courant laminaire de front large et de faible épaisseur dans lequel la masse ne subit aucun effet de compactage. Ce courant ne peut pas dériver transversalement grâce aux pas et aux sens de rotation alternés des vis. L'arrêt par intermittence du courant partiel correspondant à l'un ou l'autre desdits groupes de vis n'a que peu d'influence sur le déplacement des courants partiels contigus. La commande tout ou rien de ces courants partiels par l'intermédiaire des embrayages et des dispositifs de mesure des niveaux de remplissage des colonnes a pour conséquence remarquable que la masse se déverse toujours dans les mêmes conditions et au même débit dans les colonnes et que chacune desdites portions de masse délimitées par le volume des sas se trouve toujours dans un même état non compacté adéquat.

Dans une forme de réalisation préférée, le présent appareil comprend en outre un dispositif de transport auxiliaire comportant des vis parallèles juxtaposées à pas et à sens de rotation alternés, un moteur auxiliaire et des moyens de transmission auxiliaires. Ce dispositif de transport auxiliaire peut être utile pour mettre la masse granuleuse et collante sous forme d'un courant laminaire de front large et de faible épaisseur avant même qu'elle soit déversée sur le dispositif de transport principal.

Les dispositifs de transport sont réalisés de préférence sous forme de cadres rectangulaires ouverts dessus et fermés dessous sur la plus grande partie de leur longueur par un fond plat ou cannelé, l'extrémité aval restant ouverte. Les vis sont disposées longitudinalement au-dessus du fond et leurs extrémités pénètrent dans des paliers prévus dans des montants transversaux aval et amont du cadre. Les vis peuvent être vides ou pleines. De préférence, les vis du dispositif de transport principal sont vides, autrement dit réalisées sous forme de spirales à la manière d'un ressort hélicoïdal, et elles sont recouvertes de polytétrafluoréthylène. Par contre, les vis du dispositif de transport auxiliaire sont de préférence pleines et réalisées en polytétrafluoréthylène massif.

Les dispositifs de transport peuvent être surmontés de dispositifs de brassage comportant au moins un râteau transversal rotatif réalisé par exemple sous forme d'un axe portant à intervalles réguliers des dents radiales. Un tel dispositif de brassage peut être utile pour bien répartir la masse granuleuse et collante, notamment au voisinage de l'endroit où elle est déversée sur le dispositif de transport principal. Dans une forme de réalisation préférée du présent appareil, c'est le dispositif de transport auxiliaire qui est surmonté d'un dispositif de brassage sur la plus grand partie de sa longueur.

Lesdits moyens de transmission principaux ou auxiliaires peuvent être réalisés sous forme d'engrenages et/ou de chaînes. C'est ainsi que les groupes de vis du dispositif de transport principal peuvent être entraînés chacun par l'intermédiaire d'un arbre relié par l'intermédiaire dudit embrayage, par exemple un embrayage électromagnétique, à une roue dentée entraînée par une chaîne entraînée elle-même par une roue dentée fixée à l'arbre dudit moteur principal. Les différentes vis d'un groupe sont alors reliées entre elles par un engrenage composé de roues dentées fixées aux extrémités des vis qui peuvent dépasser à l'extérieur d'un desdits montants transversaux aval ou amont. Par contre, lesdits moyens de transmission auxiliaires peuvent être réalisés sous forme d'une seul engrenage.

Quant aux colonnes de distribution, elles comportent donc chacune une entrée, un sas et une sortie. Chaque entrée est pourvue d'un dispositif de mesure du niveau de remplissage relié à un dispositif de commande de l'embrayage du groupe de vis correspondant. Ces dispositifs sont destinés à provoquer l'arrêt ou la mise en marche dudit groupe de vis selon que le sas est complètement rempli de masse granuleuse et collante ou qu'il vient de se vider. Le dispositif de mesure du niveau de remplissage peut comprendre un senseur optique, pneumatique ou capacitif par exemple. On a constaté que de résultats particulièrement satisfaisants peuvent être obtenus avec une cellule capacitive qui donne une mesure quantitative précise de la masse accumulée devant elle. Dans ce cas, le dispositif de commande de l'embrayage peut être avantageusement réalisé sous forme d'un circuit électronique qui compare le signal délivré par la cellule capacitive avec une valeur de consigne correspondant à un niveau de remplissage limite dans l'entrée.

Une partie centrale de chaque colonne est réalisée sous forme de sas communiquant avec l'entrée et la sortie par l'intermédiaire d'un obturateur supérieur et d'un obturateur inférieur qui délimitent ou dosent le volume des portions de masse à distribuer. La paroi de la colonne comprise entre les deux obturateurs est réalisée de préférence sous forme de deux cylindres téléscopiques qui permettent d'ajuster la hauteur du sas et par conséquent le volume des portions à un valeur désirée. Les obturateurs sont reliés à un dispositif d'entraînement et commande destiné à réaliser et synchroniser leur fermeture et leur ouverture en fonction par exemple du mouvement des moules ou alvéoles qui viennent se placer sous les colonnes de distribution.

Chacune desdites sorties des colonnes peut consister en un simple prolongement du sas, par exemple sous forme d'un cylindre de diamètre adéquat correspondant par exemple au diamètre des moules ou alvéoles à remplir. Dans une variante de réalisation, lesdites sorties de colonne renferment chacune un cône de distribution disposé axialement et s'évasant vers le bas. Ces cônes de distribution sont destinés à améliorer encore la régularité de la forme des portions de masse distribuées et en particulier la planéité de leur surface. Dans une autre variante de réalisation, chacune desdites sorties de colonne présente une première partie inclinée débouchant sur une seconde partie verticale dans l'axe de laquelle est disposée une tige rotative qui présente un jeu d'ailettes radiales inclinées à son extrémité inférieure et qui est reliée à un piston et à un moyen d'entraînement par son extrémité supérieure. Ces jeux d'ailettes rotatives sont destinés à améliorer encore la planéité de la surface des portions de masse après que celles-ci ont été distribuées dans des moules ou alvéoles par exemple. Dans cette forme de réalisation, les mouvements desdits pistons sont synchronisés avec les mouvements desdits obturateurs inférieurs.

L'appareil selon la présente invention est décrit ci-après en référence au dessin dans lequel:

la fig. 1 représente une vue schématique latérale en coupe partielle d'une forme de réalisation du présent appareil,

la fig. 2 représente une vue schématique frontale en coupe partielle de la même forme de réalisation du présent appareil,

La fig. 3 représente une vue schématique partielle d'en haut du dispositif de transport principal selon les fig. 1 et 2,

La fig. 4 représente une vue schématique partielle d'en haut du dispositif de transport auxiliaire selon les fig. 1 et 2, et

La fig. 5 représente une vue schématique latérale en coupe d'une variante de réalisation de la sortie des colonnes de distribution.

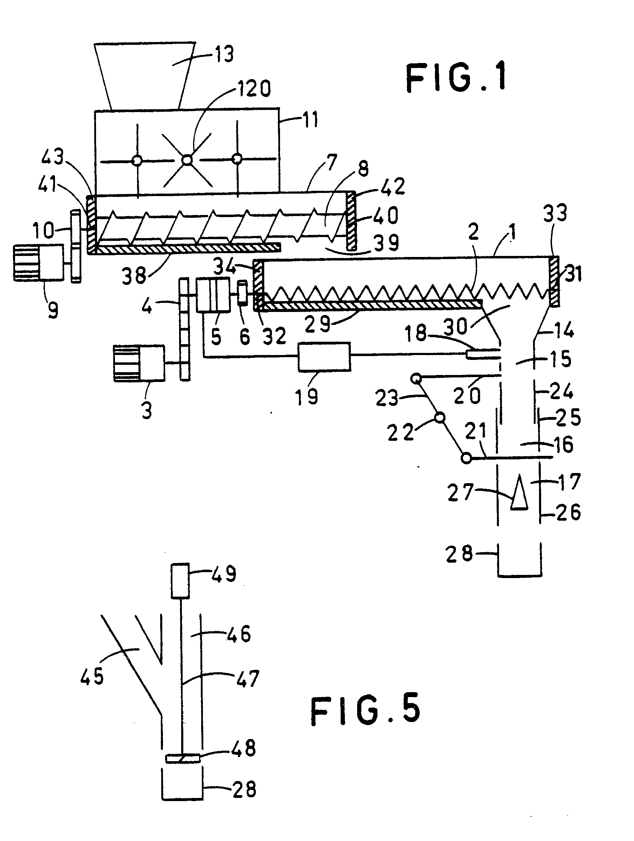

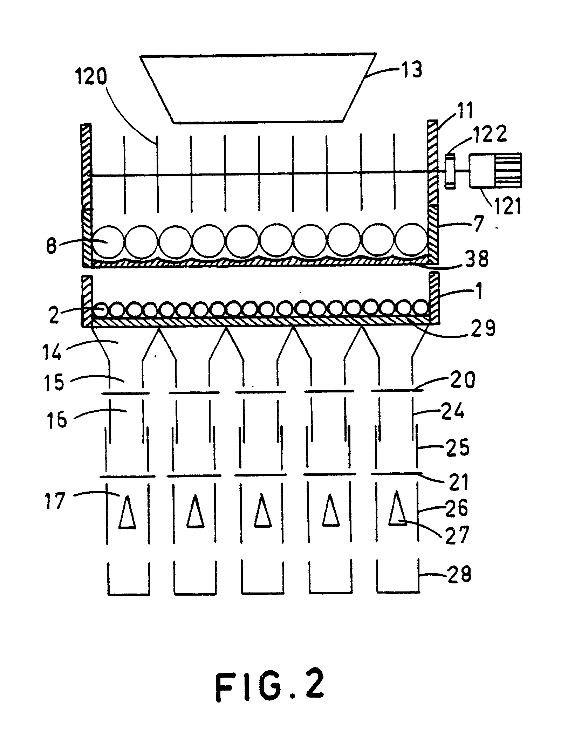

Dans la forme de réalisation représentée aux fig. 1 et 2, l'appareil comprend un dispositif de transport principal 1 comportant vingt vis parallèles juxtaposées 2, à pas et à sens de rotation alternés, subdivisées en groupes de deux paires de vis, un moteur principal 3 et des moyens de transmission principaux comprenant une chaîne 4 ainsi qu'un embrayage électromagnétique 5 et un engrenage 6 par groupe de vis.

L'appareil comprend en outre, en amont du dispositif de transport principal 1, un dispositif de transport auxiliaire 7 comportant dix vis parallèles juxtaposées 8 à pas et à sens de rotation alternés, un moteur auxiliaire 9 et des moyens de transmission auxiliaires consistant en un engrenage 10. Au-dessus du dispositif de transport auxiliaire 8 est disposé un dispositif de brassage 11 comprenant trois râteaux rotatifs transversaux 120 formés chacun d'un axe portant à intervalles réguliers des couronnes de quatre dents radiales. Ces râteaux 120 sont entraînés par un moteur 121 par l'intermédiaire d'un engrenage 122. Une trémie 13 pour l'alimentation de l'appareil en masse granuleuse et collante est disposée au-dessus du dispositif de brassage 11.

Des trémies 14 sont juxtaposées sous l'extrémité aval du dispositif de transport principal à raison d'une trémie par groupe de vis. Sous chaque trémie 14 est disposée une colonne de distribution comprenant une entrée 15, un sas 16 et une sortie 17. Chaque entrée 15 des colonnes de distribution est pourvue d'un dispositif de mesure du niveau de remplissage comprenant une cellule capacitive 18 reliée à un dispositif de commande 19 de l'embrayage électromagnétique 5. Ce dispositif de commande 19 est réalisé sous forme d'un circuit électronique de comparaison qui compare le signal délivré par la cellule capacitive avec une valeur de consigne correspondant à un niveau de remplissage limite dans l'entrée. Dès que le signal de la cellule capacitive atteint la valeur de consigne, le circuit de comparaison délivre un signal de commande du déclanchement de l'embrayage électromagnétique. Dès que le signal de la cellule capacitive retombe au-dessous de la valeur de consigne, le circuit de comparaison délivre un signal de commande de l'enclanchement de l'embrayage électromagnétique.

Chaque sas 16 comprend un obturateur supérieur 20 et un obturateur inférieur 21 réalisés ici sous forme de glissières. Ces obturateurs sont reliés à un dispositif d'entraînement et de commande comprenant ici un arbre 22 actionnant un bras oscillant 23 et relié à des moyens d'entraînement non représentés commandés par des moyens de commande et de synchronisation non représentés. Ce dispositif est destiné à ouvrir et fermer les obturateurs en fonction du mouvement des moules ou alvéoles 28 qui viennent se placer sous la sortie 17 des colonnes de distribution. La paroi de la colonne comprise entre les deux obturateurs est réalisée sous forme de deux cylindres télescopiques 24, 25.

Chacune desdites sorties des colonnes consiste en un prolongement du sas sous forme d'un cylindre 26 de diamètre correspondant au diamètre des moules ou alvéoles 28 à remplir. Chaque sortie renferme un cône de distribution 27 disposé axialement et s'évasant vers le bas.

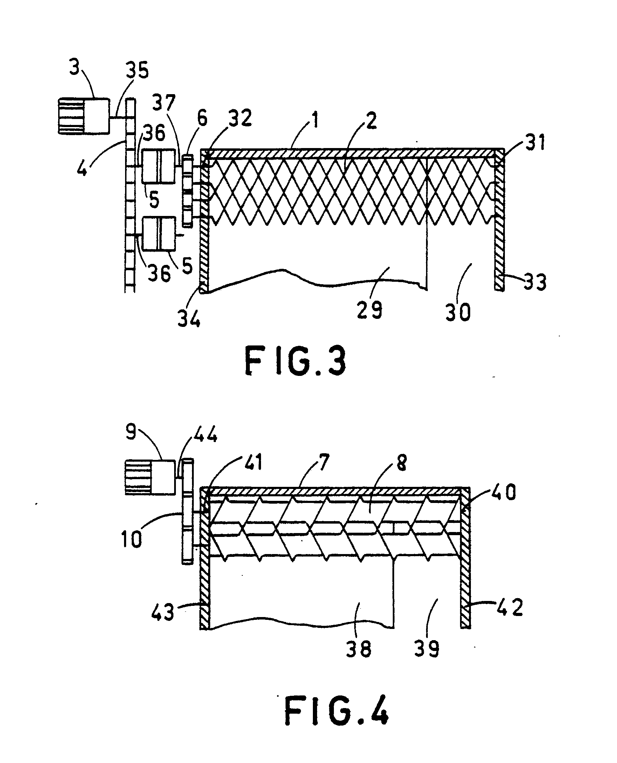

Comme représenté aux fig. 1, 2 et 3, les vis 2 du dispositif de transport principal 1 sont vides, autrement dit elles sont en forme de spirales hélicoïdales. Elles sont recouvertes de polytétrafluoréthylène. Le dispositif de transport principal 1 est réalisé sous forme d'un cadre rectangulaire ouvert dessus et fermé dessous sur la plus grande partie de sa longueur par un fond plat 29, l'extrémité aval 30 restant ouverte. Les vis 2 sont disposées longitudinalement au-dessus du fond 29 et leurs extrémités 31, 32 pénètrent dans des paliers prévus dans les montants transversaux aval 33 et amont 34 du cadre. Le moteur principal 3 entraîne la chaîne 4 par une roue dentée fixée à son arbre 35. La chaîne entraîne des roues dentées fixées aux arbres amont 36 des embrayages 5. L'arbre aval 37 de chaque embrayage entraîne l'engrenage 6 formé de roues dentées fixées aux extrémités 32 des vis qui dépassent à l'extérieur du montant transversal amont 34.

Comme représenté aux fig. 1, 2 et 4, les vis 8 du dispositif de transport auxiliaire 7 sont pleines. Elles sont réalisées entièrement en polytétrafluoréthylène. Le dispositif de transport auxiliaire 7 est également réalisé sous forme d'un cadre rectangulaire ouvert dessus et fermé dessous sur la plus grande partie de sa longueur par un fond cannelé 38, l'extrémité aval 39 restant ouverte. Les vis 8 sont disposées longitudinalement au-dessus du fonds 38 et leurs extrémités 40, 41 pénètrent dans des paliers prévus dans les montants transversaux aval 42 et amont 43 du cadre. Les vis 8 sont entraînées par le moteur auxiliaire 9 par l'intermédiaire d'un seul engrenage 10 formé d'une roue dentée fixée à l'arbre 44 du moteur et des roues dentées fixées aux extrémités 41 des vis qui dépassent à l'extérieur du montant transversal amont 43.

La variante de réalisation de la sortie des colonnes de distribution représentée à la fig. 5 présente une première partie inclinée 45 qui vient se placer sous l'obturateur inférieur 21 du sas (voir fig. 1 et 2) et qui débouche sur une seconde partie verticale 46. Dans l'axe de cette partie verticale 46 est disposée une tige rotative 47 qui présente un jeu d'ailettes radiales inclinées 48 à son extrémité inférieure et qui est reliée par son extrémité supérieure à un piston 49 combiné à un moyen d'entraînement pneumatique. Le jeu d'ailettes rotatives 48 peut s'abaisser sous l'effet du mouvement du piston de manière à égaliser la surface de la portion de matière granuleuse et collante qui s'est déversée dans le moule ou alvéole 28. Les mouvements du piston 49 sont synchronisés avec les mouvements de l'obturateur inférieur 21 du sas.

## Revendications

1. Appareil de distribution et dosage d'une masse granuleuse et collante, notamment d'une masse pour biscuits à mouler, caractérisé par le fait qu'il comprend un dispositif de transport principal (1) comportant des vis parallèles juxtaposées (2), à pas alternés, subdivisées en groupes d'au moins une paire de vis, un moteur principal (3) et des moyens de transmission principaux (4-6), adaptés pour entraîner les vis selon des sens de rotation alternés, comprenant un embrayage (5) par groupe de vis, des trémies (14) juxtaposées sous l'extrémité aval du dispositif de transport principal à raison d'une trémie par groupe de vis, et sous chaque trémie une colonne de distribution comprenant une entrée (15), un sas (16) et une sortie (17), ladite entrée (15) étant pourvue d'un dispositif de mesure du niveau de remplissage (18) relié électroniquement à un dispositif de commande (19) de l'embrayage (5) dudit groupe de vis.

2. Appareil selon la revendication 1, caractérisé par le fait qu'il comprend en outre un dispositif de transport auxiliaire (7) comportant des vis parallèles juxtaposées (8) à pas et à sens de rotation alternés, un moteur auxiliaire (9) et des moyens de transmission auxiliaires (10).

3. Appareil selon la revendication 1, caractérisé par le fait que les vis (2) du dispositif de transport principal (1) sont en forme de spirales hélicoïdales et recouvertes de polytétrafluoréthylène.

4. Appareil selon la revendication 2, caractérisé par le fait que les vis (8) du dispositif de transport auxiliaire (7) sont pleines et sont en polytétrafluoréthylène.

5. Appareil selon la revendication 2, caractérisé par le fait que le dispositif de transport auxiliaire (7) est surmonté d'un dispositif de brassage (11) comprenant au moins un râteau rotatif transversal (12).

6. Appareil selon la revendication 1, caractérisé par le fait que chacun desdits dispositifs de mesure du niveau de remplissage (18) comprend une cellule capacitive.

7. Appareil selon la revendication 1, caractérisé par le fait que chacune desdites sorties de colonne (17) renferme un cône de distribution (27) disposé axialement et s'évasant vers le bas.

8. Appareil selon la revendication 1, caractérisé par le fait que chacune desdites sorties de colonne (17) présente une première partie inclinée (45) débouchant sur une seconde partie verticale (46) dans l'axe de laquelle est disposée une tige rotative (47) qui présente un jeu d'ailettes radiales inclinées (48) à son extrémité inférieure et qui est reliée à un piston (49) et à un moyen d'entraînement par son extrémité supérieure.

**Claims**

1. An apparatus for distributing and metering a granular and tacky paste, more particularly a paste for moulding biscuits, characterized in that it comprises a main transport unit (1) comprising juxtaposed parallel screws (2) with alternate threads which are divided into groups of at least one pair of screws, a main motor (3) and main transmission means (4-6) - adapted to drive the screws in alternate directions of rotation - comprising one clutch (5) per group of screws, juxtaposed hoppers (14) beneath the downstream end of the main transport unit, there being one hopper per group of screws, and beneath each hopper a distribution column comprising an inlet (15), an air lock (16) and an outlet (17), said inlet (15) being provided with a device (18) for measuring the filling level which is electronically connected to a control mechanism (19) for the clutch (5) of said group of screws.

2. An apparatus as claimed in claim 1, characterized in that it additionally comprises an auxiliary transport unit (7) comprising juxtaposed parallel screws (8) with alternate threads and directions of rotation, an auxiliary motor (9) and auxiliary transmission means (10).

3. An apparatus as claimed in claim 1, characterized in that the screws (2) of the main transport unit (1) are in the form of helical spirals and are coated with polytetrafluoroethylene.

4. An apparatus as claimed in claim 2, characterized in that the screws (8) of the auxiliary transport unit (7) are solid and are made of polytetrafluoroethylene.

5. An apparatus as claimed in claim 2, characterized in that the auxiliary transport unit (7) is surmounted by a mixing unit comprising at least one transverse rotary scraper (12).

6. An apparatus as claimed in claim 1, characterized in that each of the devices (18) for measuring the filling level comprises a capacitive cell.

7. An apparatus as claimed in claim 1, characterized in that each of the column outlets (17) comprises a downwardly widening, axially arranged distribution cone (27).

8. An apparatus as claimed in claim 1, characterized in that each of said column outlets (17) comprises a first inclined part (45) opening onto a second vertical part (46) in the axis of which is arranged a rotary rod (47) which comprises a set of radial, inclined fins (48) at its lower end and which is connected to a piston (49) and to a drive means at its upper end.

## Patentansprüche

1. Apparat zur Verteilung und Dosierung einer granulierten und klebrigen Masse, insbesondere einer Masse für geformte Biskuits, dadurch gekennzeichnet, daß er eine Haupttransporteinrichtung (1) aufweist, die parallel nebeneinanderliegende Schnecken (2) mit alternierenden Steigungen aufweist, die in Gruppen aus mindestens einem Paar Schnecken aufgeteilt sind, ferner einen Hauptmotor (3) und Haupttransmissionsmittel (4-6), die so ausgelegt sind, daß sie die Schnecken in alternierenden Rotationsrichtungen antreiben und eine Kupplung (5) pro Schneckengruppe enthalten, nebeneinanderliegende Trichter (14) unter dem stromab liegenden Ende der Haupttransporteinrichtung in einem Verhältnis von einem Trichter pro Schneckengruppe, und unter jedem Trichter eine Verteilungssäule, die einen Eingang (15), eine Schleuse (16) und einen Ausgang (17) aufweist, wobei der genannte Eingang (15) mit einer Meßeinrichtung für das Füllmengenniveau (18) versehen ist, die elektronisch mit einer Steuervorrichtung (19) für die Kupplung (5) der entsprechenden Schneckengruppe verbunden ist.

2. Apparat nach Anspruch 1, dadurch gekennzeichnet, daß er außerdem eine Hilfstransportvorrichtung (7) aufweist, die parallel nebeneinanderliegende Schnecken (8) mit alternierender Steigung und Rotationsrichtung, einen Hilfsmotor (9) und Hilfstransmissionsmittel (10) aufweist.

3. Apparat nach Anspruch 1, dadurch gekennzeichnet, daß die Schnecken (2) der Haupttransportvorrichtung die Form von schraubenförmigen Spiralen aufweisen und mit Polytetrafluorethylen überzogen sind.

4. Apparat nach Anspruch 2, dadurch gekennzeichnet, daß die Schnecken der Hilfstransportvorrichtung (7) massiv und aus Polytetrafluorethylen sind.

5. Apparat nach Anspruch 2, dadurch gekennzeichnet, daß die Hilfstransportvorrichtung (7) mit einer Rührvorrichtung (11) versehen ist, die wenigstens einen transversalen Drehrechen (12) aufweist.

6. Apparat nach Anspruch 1, dadurch gekennzeichnet, daß jede der genannten Meßeinrichtungen für die Füllmenge (18) eine kapazitive Zelle aufweist.

7. Apparat nach Anspruch 1, dadurch gekennzeichnet, daß jeder der genannten Säulenausgänge (17) einen Verteilungskegel (27) einschließt, der axial und nach unten breiter werdend angeordnet ist.

8. Apparat nach Anspruch 1, dadurch gekennzeichnet, daß jeder der genannten Säulenausgänge (17) einen ersten geneigten Abschnitt (45) aufweist, der in einen zweiten vertikalen Abschnitt (46) mündet, in dessen Achse eine rotierende Stange (47) angeordnet ist, die einen Satz von geneigten radialen Flügeln (48) an ihrem unteren Ende aufweist und die mit einem Kolben (49) und einem Antriebsmittel an ihrem oberen Ende verbunden ist.

FIG.1

FIG.5

FIG.2

FIG.3

FIG.4